# EUROPÄISCHE PATENTSCHRIFT

(11) **EP 2 659 497 B1**
(45) Veröffentlichungstag und Bekanntmachung des Hinweises auf die Patenterteilung: **01.06.2016**
(21) Anmeldenummer: 12715640.4
(22) Anmeldetag: 28.03.2012
(51) Int. Cl.: B60L 11/18, H01F 38/14

(54) **FLACHSPULE FÜR KONTAKTLOSE INDUKTIVE ENERGIEÜBERTRAGUNG**
FLAT COIL FOR A CONTACTLESS INDUCTIVE ENERGY TRANSMISSION
BOBINE PLATE POUR UN TRANSFERT D'ÉNERGIE PAR INDUCTION, SANS CONTACT

(30) Priorität: 30.06.2011 DE 102011107620
(43) Veröffentlichungstag der Anmeldung: 06.11.2013
(73) Patentinhaber: Paul Vahle GmbH & Co. KG, 59174 Kamen (DE)
(72) Erfinder: MEINS, Jürgen, 3126 Braunschweig (DE); SCHMÜLLING, Benedikt, 44628 Herne (DE); TURKI, Faical, 59192 Bergkamen (DE); VOSSHAGEN, Thomas, 57489 Drolshagen (DE)
(74) Vertreter: Lenzing Gerber Stute
(86) Internationale Anmeldenummer: PCT/EP2012/055540
(87) Internationale Veröffentlichungsnummer: WO 2013/000593

(56) Entgegenhaltungen:
- EP-A2- 2 216 870
- WO-A1-2007/013725
- WO-A1-2009/063975
- WO-A1-2011/007661
- US-A1- 2009 230 777
- US-A1- 2010 244 579

## Beschreibung

Die vorliegende Erfindung betrifft ein induktives Energieübertragungssystem zur Übertragung von elektrischer Energie zwischen einer Basisstation und einem beweglichen Verbraucher, insbesondere einem Fahrzeug, wobei mittels des Energieübertragungssystems elektrische Energie von einer Basisstation zum Verbraucher und/oder vom Verbraucher zur Basisstation übertragbar ist, wobei das Energieübertragungssystem mindestens eine in der Basisstation angeordnete primärseitige und eine im Verbraucher sekundärseitig angeordnete Flachspule mit jeweils mehreren Windungen aufweist, wobei die Windungen um einen Mittelpunkt herum konzentrisch oder spiralförmig angeordnet sind.

Für das induktive Laden eines Fahrzeugs wird eine Basisstation mit einer Primärspule sowie eine sekundärseitige Pickup-Spule am Fahrzeug benötigt. Die Spulen sind in der Regel als Ladeplatten mit Flachspulen ausgebildet, wobei die Basisstation oft die Maße 1m x 1m und die sekundärseitige Pickup die Maße 0,8m x 0,8m aufweist. Die sekundärseitige Pickup ist bevorzugt als Unterbodenpickup unter dem Fahrzeug angeordnet. Die Wicklungen der primär- und sekundärseitigen Flachspulen sind konzentriert gewickelt, d.h. die benachbarten Windungen grenzen unmittelbar ohne einen Abstand aneinander an. Sie müssen aber nicht unbedingt aneinander liegen. Die Spulen können dabei konzentrisch oder spiralförmig gewickelt sein.

In die Primärspule wird ein Wechselstrom eingespeist, der ein magnetisches Wechselfeld erzeugt. Dieses magnetische Feld ist mit der Sekundärspule mittels des Kopplungsfaktors k gekoppelt und induziert dort eine elektrische Spannung. Mit den bislang verwendeten konzentrierten Wicklungen lässt sich jedoch in der Regel nur eine geringe Kopplung erzielen, die von vielen Faktoren, insbesondere dem Abstand der Flachspulen zueinander, abhängt.

Es ist ferner bekannt Flachspulen derart zu wickeln, dass die benachbarten Windungen zueinander einen Abstand aufweisen, damit sich ein bestimmtes Magnetfeld oberhalb der Spule einstellt, damit mit diesem Magnetfeld Teile geformt werden können.

Aus WO2007/013725 A1 ist ein kontaktloses Energieübertragungssystem bekannt, bei dem die primärseitige Spulenanordnung aus mehreren konzentrisch zueinander angeordneten Flachspulen zusammengesetzt ist, wobei die Abstände der Windungen der einzelnen Flachspulen zueinander jeweils gleich bleibend ausgebildet ist.

Aus US2009/0230777 A1 ist ebenfalls ein kontaktloses induktives Energieübertragungssystem vorbekannt, bei dem die primärseitige Spulenanordnung aus konzentrisch ineinandergelegten Zylinderspulen gleicher Windungszahl gebildet ist.

Die WO2011/007661 A1 offenbart ein kontaktloses induktives Energieübertragungssystem mit nur einer primärseitigen und einer sekundärseitigen Flachspule, wobei die primärseitige Flachspule mehr Windungen und einen größeren Außendurchmesser als die sekundärseitige Flachspule aufweist. Der Abstand der einzelnen Windungen zueinander ist bei beiden Flachspulen gleich groß und gleichbleibend. Ein ähnliches Energieübertragungssystem ist aus US2010/0244579 A1 vorbekannt.

Aufgabe der vorliegenden Erfindung ist es daher, ein gattungsgemäßes System derart zu verbessern, dass es einen höheren Kopplungsfaktor aufweist. Diese Aufgabe wird mit einem System mit den Merkmalen des Anspruchs 1 gelöst. Vorteilhafte Ausgestaltungen ergeben sich durch die Merkmale der Unteransprüche.

Der Erfindung liegt der Gedanke zugrunde, dass durch nicht konzentriert gewickelte Flachspulen ein Magnetfeld erzeugbar ist, bei dem sich eine höhere und damit bessere Kopplung zwischen der primärseitigen und sekundärseitigen Flachspule ergibt. Dies wird erzielt, in dem zumindest für die primärseitige Spule eine Flachspule mit Wicklungen verwendet wird, bei denen zumindest einige der benachbarten Windungen einen Abstand zueinander aufweisen. Hierdurch kann die Feldverteilung vorteilhaft beeinflusst werden, wodurch eine bessere Kopplung erreicht werden kann, in dem der Anteil des durch die Primärspule erzeugten magnetischen Flusses, der mit der Sekundärspule gekoppelt ist, signifikant vergrößert wird. Die bessere Kopplung führt vorteilhaft zu höheren Wirkungsgraden, so dass ein vergleichsweise geringerer Primärstrom zur Erzeugung der gleichen Sekundärspannung erforderlich ist. Aufgrund des besseren Wirkungsgrades bzw. der besseren Kopplung kann alternativ vorteilhaft mit kleinerer Windungszahl die gleiche Sekundärspannung erzeugt werden. Eine kleinere Windungszahl verringert vorteilhaft die ohmschen Verluste in der Spule. Hierdurch sinkt aufgrund des kleineren Scheinstroms der Blindleistungsbedarf, wodurch vorteilhaft die Verluste verringert werden.

Durch die verwendeten Abstände der einzelnen Windungen zueinander kann erreicht werden, dass sich ein homogenes Feld einstellt, wodurch lokale Feldmaxima vermieden werden, die lokal zu einer Überschreitung gesetzlicher oder für die funktionale Sicherheit notwendigen Grenzwerte führen könnten. Es ist jedoch nicht notwendig, dass sämtliche zueinander benachbart angeordneten Windungen zueinander beabstandet sind. Es ist auch möglich, dass einige benachbart angeordnete Windungen bzw. Wicklungsdrähte unmittelbar aneinander oder in einem nicht signifikanten Abstand zueinander angeordnet sind.

Die Homogenisierung des magnetischen Feldes zwischen der primärseitigen und sekundärseitigen Anordnung führt zudem dazu, dass das magnetisch leitfähige Material der Rückschlussjoche der Primär- und Sekundärseite besser ausgenutzt wird und diese somit vorteilhaft dünner ausgelegt werden muss. Hierdurch wird vorteilhaft Material und Gewicht gespart, was zu geringeren Herstellungskosten und einem geringeren Energieverbrauch des Fahrzeugs führt.

Um ein möglichst homogenes Magnetfeld zumindest im Bereich der Windungen der Sekundärseite zu erzielen, besteht zumindest zwischen einigen benachbarten Windungen der primärseitigen Flachspule ein Abstand, wobei gleichzeitig die Entfernung zwischen der am nächsten zum Mittelpunkt angeordneten und der am weitesten vom Mittelpunkt entfernt angeordneten Windung bei der primärseitigen Spule größer ist als bei einer sekundärseitigen Spule. Das bedeutet, dass die Wicklungsbereiche der primär- und sekundärseitigen Flachspulen unterschiedlich breit ausgebildet sind.

Die Abstände zwischen den benachbarten Windungen der primärseitigen Spule sind dabei derart zu bemessen, dass sie größer als der Durchmesser des Wicklungsleiters oder des Wicklungsdrahtes sind. Windungsverteilung und die Abstände der Windungen zueinander sind dabei vor allem empirisch oder mittels geeigneter Simulationsprogramme zu ermitteln. Auch können Optimierungsverfahren eingesetzt werden, die für den jeweiligen Anwendungsfall die optimale Windungsanordnung berechnen.

Gemäß der vorliegenden Erfindung nimmt der Abstand zwischen den einzelnen Windungen vom Mittelpunkt aus hin zur äußersten Windung hin ab order sind die Abstände zwischen benachbarten Windungen zueinander zumindest teilweise unterschiedlich groß.

Die innere Windung der primärseitigen Flachspule ist dabei näher zum Mittelpunkt angeordnet als die innere Windung der sekundärseitigen Flachspule und/oder ist die äußerste Windung der primärseitigen Flachspule weiter vom Mittelpunkt entfernt angeordnet als die äußerste Windung der sekundärseitigen Flachspule.

Die Windungen der sekundärseitigen Flachspule können konzentriert zueinander angeordnet sein, das heißt, nebeneinander, insbesondere aneinander angrenzend. Hierdurch ergibt sich vorteilhaft eine minimale Breite des Windungsbereichs der Sekundärspule, so dass das Magnetfeld nur in einem kleinen Bereich homogen ausgebildet sein muss, was die Anforderungen an die Windungsverteilung der Primärspule verringert.

Selbstverständlich können die Windungszahlen für die jeweils erforderlichen Einsatzzwecke frei gewählt werden. Sofern jedoch u.a. auch eine bidirektionale Energie und/oder Datenübertragung möglich sein soll, sind die Windungszahlen der primär- und sekundärseitigen Flachspulen vorteilhaft gleich zu wählen.

Die primär- und sekundärseitigen Flachspulen können selbstverständlich kreisförmig, rechteckig oder oval ausgebildet sein. Auch ist es möglich, dass die Windungen entweder spiralförmig oder konzentrisch gewickelt sind.

Damit eine bidirektionale Energieübertragung möglich ist, kann bei einer Weiterentwicklung des erfindungsgemäßen induktiven Energieübertragungssystems die Basisstation jeweils eine konzentriert gewickelte Flachspule sowie eine Flachspule mit zueinander beabstandeten Windungen aufweisen, wobei auch die sekundärseitige Verbraucherseite jeweils eine konzentriert gewickelte Flachspule sowie eine Flachspule mit zueinander beabstandeten Windungen aufweist. Dabei wird je nach Übertragungsrichtung jeweils die Flachspule mit konzentrierter Wicklung als sekundärseitige Flachspule und die Flachspule mit zueinander beabstandeten Windungen als primärseitige Flachspule verwendet. Es wird somit je nach Übertragungsrichtung die eine oder die andere Flachspule auf Seiten der Basisstation und des Fahrzeugs verwendet.

Ebenso ist es möglich wenn die primärseitige und/oder sekundärseitige Flachspule jeweils einen Windungsbereich mit Windungen aufweist, die konzentriert zueinander gewickelt sind und mindestens einen Windungsbereich aufweist, dessen benachbarte Windungen zueinander beabstandet sind. In einer Weiterbildung dieser Ausführungsform können Schaltmittel vorgesehen sein, mit denen ein oder mehrere Windungsbereiche aktiv schaltbar und somit mit einer nach- oder vorgeschalteten Elektronik verbindbar sind. Hierdurch kann das erzeugt Magnetfeld durch die Wahl der aktivgeschalteten Windungsbereiche beeinflusst werden. Eine derartige Flachspule kann somit als Sendespule mit zueinander beabstandeten Windungen und auch als Empfangsspule, d.h. sekundärseitige Spule, mit konzentrierter Wicklung, dienen.

Es ist ebenfalls möglich, dass die primärseitige und/oder sekundärseitige Flachspule jeweils mindestens eine einzelne Windung oder mindestens einen Windungsbereich aufweist, der bzw. die relativ zu anderen Windungen verschieblich angeordnet sind und/oder deren Durchmesser sich ändern lässt, derart, dass das mit dieser Flachspule erzeugte Magnetfeld veränderbar ist. Hierdurch kann adaptiv der Kopplungsfaktor während des Betriebs oder der Inbetriebnahme optimiert werden.

Vorteilhaft wird der Kopplungsfaktor durch einen geringfügigen seitlichen Versatz der primärseitigen Anordnung zur sekundärseitigen Anordnung durch die erfindungsgemäße Windungsanordnung nur unwesentlich beeinflusst. Dies wird vorteilhaft dadurch erreicht, dass das magnetische Feld der Primärspule wesentlich homogener im Bereich der Sekundärspule ist als bei einer Primärspule mit einer konzentrierten Wicklung.

Nachfolgend wir das erfindungsgemäße induktive Energieübertragungssystem anhand von Zeichnungen näher erläutert.

Es zeigen:
- Fig. 1:: Magnetfeld einer konzentriert gewickelten Flachspule und einer Flachspule mit verteilt und zueinander beabstandeten Windungen;
- Fig. 2:: vergleichende Feldverteilung;
- Fig. 3:: Querschnittsdarstellung und Draufsicht auf eine Flachspule mit zueinander beabstandeten Windungen;
- Fig. 4:: Draufsicht auf den Deckel des Trägers für die Primärwicklung;
- Fig. 5:: Draufsicht auf den Deckel des Trägers für die Sekundärwicklung;
- Fig. 6:: Querschnittsdarstellung durch den Träger für die Primärwicklung.

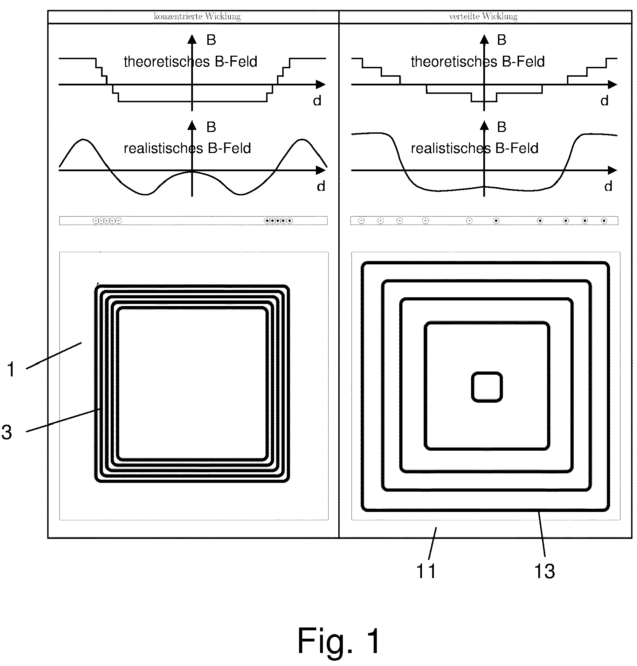

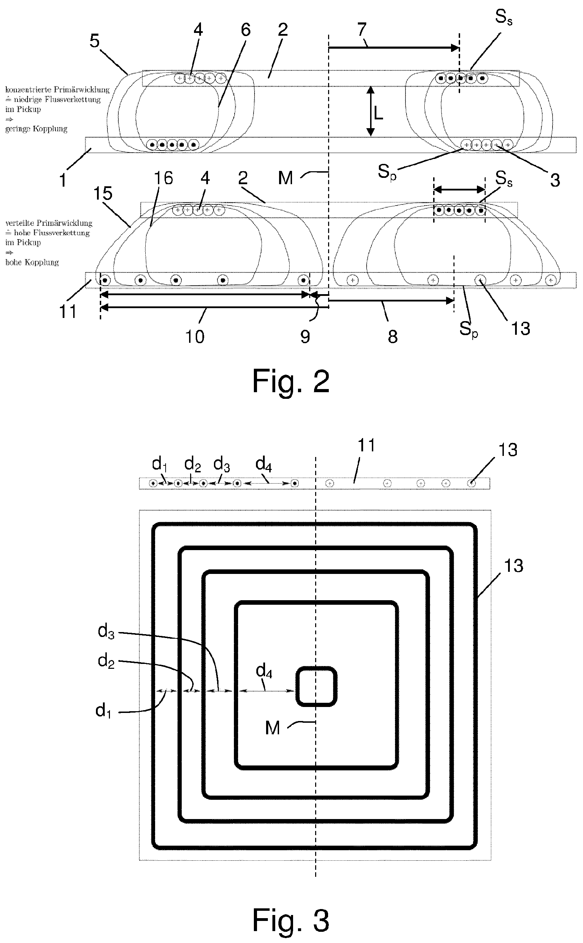

In Figur 1 ist auf der linken Seite die stationäre Ladeplatte 1 in Draufsicht und Seitenansicht mit einer konzentrierten Wicklung 3 dargestellt. Darüber ist einmal das sich theoretisch einstellende orthogonale B-Feld und das sich unter realistischen Bedingungen einstellende orthogonale B-Feld der konzentriert gewickelten Flachspule 3 dargestellt. Die Unterschiede zwischen Theorie und Praxis sind hauptsachlich durch den großen Luftspalt L (siehe Figur 2) zwischen Ladeplatte 1 und Pickup 2 von in der Regel mindesten 80mm verursacht. Hierdurch konzentriert sich das B-Feld eher in der Nähe der Wicklung 3 anstatt die gesamte Ladeplatte 1 gleichmäßig auszunutzen. Die Mitte M der Ladeplatte 1 bleibt daher z.B. zu großen Teilen ohne B-Feld.

Auf der rechten Seite ist eine Flachspule 11 mit verteilt und zueinander beabstandeten Windungen 13 dargestellt. Darüber ist das sich theoretisch einstellende orthogonale B-Feld und das sich unter realistischen Bedingungen einstellende orthogonale B-Feld der rechten Flachspule 13 dargestellt. Eine bessere Ausnutzung des vorhandenen Platzes wurde mittels Simulationen erreicht, indem die Windungen verteilt angeordnet werden, wodurch sich oberhalb der Primärspule ein homogeneres Magnetfeld ergibt. Dabei können die einzelnen Abstände dᵢ alle zueinander verschieden sein, müssen es aber nicht. Der Betrag des realistischen B-Feldes (unten) ist annähernd homogen über die gesamte Länge d der Ladeplatte und ähnelt eher dem theoretischen Feld (oben links) der konzentrierten Wicklung 3 (linke Wicklung).

Die Figur 2 zeigt die Ladeplatte 1, 11 der Basisstation und die Pickup 2 in der Seitenansicht. In der oberen Darstellung ist die Wicklung 3 der Ladeplatte 1 aus einer Standard-Flachspule Sₛ, Sₚ mit konzentriert angeordneten Windungen gebildet. Die Magnetfeldlinien 5, 6 bei der gattungsgemäßen Lösung umfassen nicht sämtliche Windungen 4 der Sekundärspule Sₛ. In der unteren Darstellung ist die Wicklung 13 als verteilte Flachspule Sₚ ausgebildet. Die Figur 2 verdeutlicht, dass es durch die Verteilung bzw. die Beabstandung der benachbarten Windungen 13 möglich ist, einen größeren Anteil des erzeugten magnetischen Flusses 15, 16 mit der sekundärseitigen Pickup-Wicklung 4 zu verketten. Hierdurch wird die Kopplung zwischen Primär- und Sekundarseite Sₛ, Sₚ erhöht.

Durch die bessere Kopplung ist ein geringerer Primärstrom notwendig um die gleiche Induktionsspannung auf der Sekundarseite zu erzeugen gegenüber einem System mit schlechterer Kopplung. Der Wirkungsgrad des Systems ist daher höher als bei den gattungsgemäßen Systemen mit konzentrierten Wicklungen.

In Figur 3 ist noch einmal vergrößert die Flachspule Sₚ mit verteilt angeordneten Windungen 13 dargestellt. Die Abstände d₁ bis d₄ sind jeweils derart zu wählen, dass sich ein B-Feld ergibt, dessen Magnetfeldlinien 15, 16 möglichst alle Windungen der sekundärseitigen Wicklung 4 umschließen. Die Windungen sind konzentrisch um den Mittelpunkt M herum angeordnet. Dabei können die einzelnen Windungen über orthogonale Verbindungsstege miteinander verbunden sein, die hier nicht dargestellt sind. Die Wicklungen können wie dargestellt quadratisch sein. Sie können jedoch auch rechteckig, oval oder kreisförmig sein. Ebenso können die Windungen spiralförmig um den Mittelpunkt herum angeordnet sein. Eine rechteckige Form bietet sich an, wenn die Pickup-Spule z.B. im Bereich des Nummernschildes eines Fahrzeugs angeordnet ist.

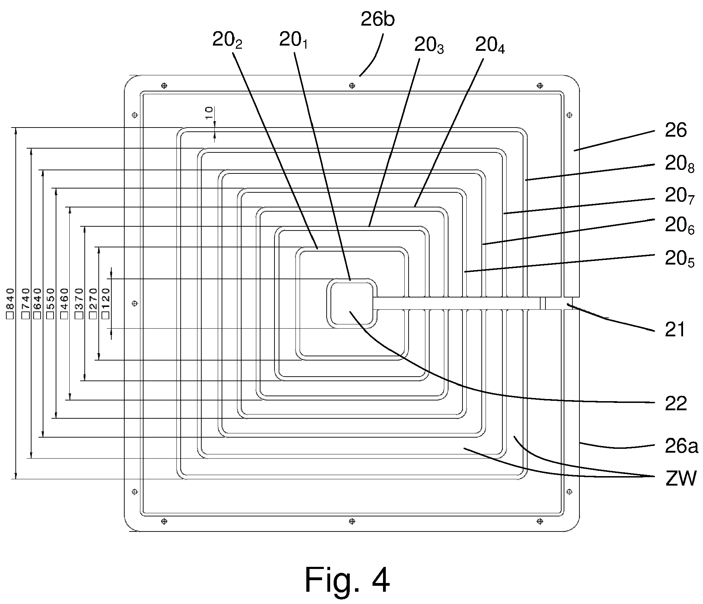

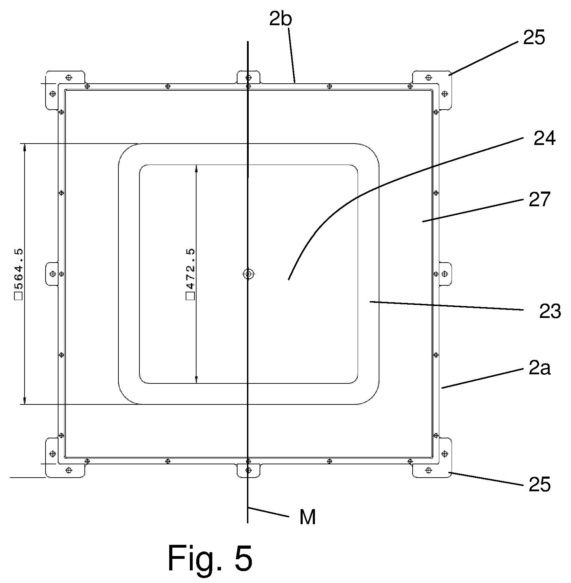

Die Figuren 4 und 5 zeigen Draufsichten auf die Deckel 26, 27 der Träger 11 und 2 für die Primär- und Sekundärwicklung. Die Abstände der einzelnen Windungen der Primärspule sind dabei so gewählt, dass sich bei einem Abstand von ca. 90 mm bis 180 mm ein homogenes Magnetfeld zwischen der Primär- und der Sekundärspule einstellt.

Es hat sich als vorteilhaft herausgestellt, wenn der Effektivwert des Primärstromes ca. 9A bis 14A beträgt. Dabei ist darauf zu achten, dass der Strom nicht so hoch ist, dass das Flussleitmaterial in Sättigung geht. Die Frequenz kann im Bereich von 120 bis 180 KHz liegen. Die Primärwicklung hat in der dargestellten Ausführungsform gem. der Figuren 4 und 5 acht Windungen und die Sekundärwicklung hat ebenfalls acht Windungen.

Die Flachwicklungen sind rechteckig ausgebildet, wobei die einzelnen Windungen konzentrisch zueinander angeordnet sind. Selbstverständlich ist es auch möglich, dass die Windungen spiralförmig ausgebildet sind.

Die Deckel 26, 27 weisen umlaufende Ausnehmungen 20₁₋₈ und 23 auf, welche z.B. durch eingeprägte, eingefräste oder ausgeformte Nuten gebildet sein können. In den Ausnehmungen 20₁₋₈ und 23 sind die Wicklungsdrähte der Wicklungen angeordnet bzw. liegen in diesen ein. Es ist selbstverständlich möglich, dass anstatt der Ausnehmungen 20₁₋₈ und 23 seitliche Begrenzungen, z.B. in Form von Erhebungen oder Vorsprüngen, vorgesehen sind, die die Wicklungsdrähte in Position und zueinander beabstandet halten.

In jeder rechteckig ausgebildeten Ausnehmung 20₁₋₈ des primärseitigen Trägers 26 kann jeweils ein eine Windung bildendender Wicklungsdraht einliegen. Selbstverständlich ist es auch möglich, dass in jeder Ausnehmung 20₁₋₈ mehrere Wicklungsdrähte, z.B. ein, zwei oder mehr, zueinander parallel angeordnet sind und einliegen. Die Wicklungsdrähte werden über die Ausnehmung 21 zu den einzelnen Ausnehmungen 20₁₋₈ geführt. Die Ausnehmung 21 ist orthogonal zu den Ausnehmungen 20₁₋₈ angeordnet, so dass der Strom, welcher durch die in der Ausnehmung 21 einliegenden Wicklungsabschnitten fließt keine Auswirkungen auf das erzeugte Magnetfeld der Primärspulenanordnung hat. Die Ausnehmungen 20₁₋₈ sind durch die Zwischenbereiche ZW zueinander beabstandet, so dass sich eine verteilte Wicklung ergibt. In Figur 4 sind die Abmessungen der Ausnehmungen 20₁₋₈ angegeben. Die als Nuten ausgebildeten Ausnehmungen 20₁₋₈ haben jeweils eine Breite von 10mm. Die innerste Ausnehmung 20₁ hat einen äußeren Durchmesser von 120mm. Die Mitte des innersten Wicklungsdrahtes hat somit einen Abstand zum Mittelpunkt von 115mm. Die die innerste Ausnehmung 20₁ als nächstes umfassende Ausnehmung 20₂ hat einen äußeren Durchmesser von 270mm.

Die Seiten 26a, 26b des Deckels 26 sind jeweils gleich lang, so dass der Deckel 26 quadratisch ist. Es ist jedoch ebenso möglich, dass der Deckel 26 und somit der Träger 11 rechteckförmig ist.

Die Wicklungsdrähte der Sekundärwicklung sind in der Ausnehmung 23, welche sich um den mittleren Bereich 24 des Trägers 2 erstreckt, angeordnet. Die Wicklungsdrähte liegen dabei aneinander an und sind lediglich durch das elektrisch isolierende Material voneinander getrennt. Der Deckel 27 weist Befestigungsstellen 25 zur Befestigung, z.B. an einem Fahrzeug, auf.

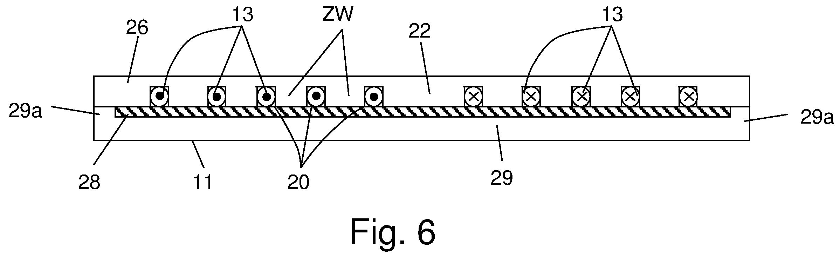

Die Figur 6 zeigt einen Querschnitt durch die primärseitige Spulenanordnung. Der Träger 11 weist einen Deckel 26 auf, welcher vorzugsweise aus einem Glasfaserverbundmaterial hergestellt ist und Ausnehmungen 20 in Form von Nuten aufweist, in denen die Wicklungsdrähte 13 einliegen. Auf einer Basisplatte 29, welche z.B. aus Aluminium hergestellt sein kann, ist als Flussleitmaterial eine Ferritplatte 28 angeordnet. Die Ferritplatte 28 kann auch durch kleine gestapelte Ferritplättchen zusammengesetzt sein. Der Deckel 26 und die Basisplatte 29 sind an den Seiten 29a miteinander verschraubt. Die Breite der Zwischenbereiche ZW bestimmt den Abstand der zueinander benachbarten Wicklungsdrähte 13 bzw. Windungen.

Die Deckel der primär- und sekundärseitigen Träger sind vorteilhaft aus einem leichten, robusten und verbiegungssteifen Material damit die Wicklungen gut gegen äußere mechanische Kräfte geschützt sind. Heute wird als Flussleitmaterial in der Regel Ferritmaterial verwendet, welches spröde ist und daher die Gefahr besteht, dass es durch äußere Kräfte zerstört wird. Daher muss sichergestellt sein, dass der Träger das Ferritmaterial 28 hinreichend gegen Zerstörung schützt.

## Patentansprüche

1. Induktives Energieübertragungssystem zur Übertragung von elektrischer Energie zwischen einer Basisstation und einem beweglichen Verbraucher, insbesondere einem Fahrzeug, wobei mittels des Energieübertragungssystems elektrische Energie von einer Basisstation zum Verbraucher und/oder vom Verbraucher zur Basisstation übertragbar ist, wobei das Energieübertragungssystem mindestens eine in der Basisstation angeordnete primärseitige und eine im Verbraucher sekundärseitig angeordnete Flachspule (Sₛ, Sₚ) mit jeweils mehreren Windungen (3, 4) aufweist, wobei die Windungen (3, 4) um einen Mittelpunkt (M) herum konzentrisch oder spiralförmig angeordnet sind, wobei zumindest zwischen einigen benachbarten Windungen (13) einer primärseitigen Flachspule (Sₚ) ein Abstand (dᵢ) zueinander besteht und die Entfernung (9, 10) zwischen der am nächsten zum Mittelpunkt (M) angeordneten und der am weitesten vom Mittelpunkt (M) entfernt angeordneten Windung bei der primärseitigen Spule (Sₚ) größer ist als bei einer sekundärseitigen Spule (Sₛ), **dadurch gekennzeichnet, dass** die innere Windung der primärseitigen Flachspule (Sₚ) näher zum Mittelpunkt (M) angeordnet ist als die innere Windung der sekundärseitigen Flachspule (Sₛ) und dass die äußerste Windung der primärseitigen Flachspule (Sₚ) weiter vom Mittelpunkt (M) entfernt angeordnet ist als die äußerste Windung der sekundärseitigen Flachspule (Sₛ), und dass der Abstand (dᵢ) zwischen den einzelnen Windungen (13) der primärseitigen Flachspule (Sp) vom Mittelpunkt (M) aus hin zur äußersten Windung hin abnimmt oder die Abstände (dᵢ) zwischen benachbarten Windungen (13) der primärseitigen Flachspule (Sp) zueinander zumindest teilweise unterschiedlich groß sind.

2. Induktives Energieübertragungssystem nach Anspruch 1, **dadurch gekennzeichnet, dass** zumindest einige benachbarte Windungen der primärseitigen Spule (Sₚ) einen Abstand (dᵢ) zueinander aufweisen, der größer als der Durchmesser des Wicklungsleiters oder Wicklungsdrahtes ist, bevorzugt mindestens dem 2 bis 10-fachen des Wicklungsleiters oder Wicklungsdrahtes entspricht.

3. Induktives Energieübertragungssystem nach Anspruch 1 oder 2, **dadurch gekennzeichnet, dass** die Windungen (4) der sekundärseitigen Flachspule (Sₛ) konzentriert zueinander angeordnet sind, das heißt, nebeneinander, insbesondere aneinander angrenzend, angeordnet sind.

4. Induktives Energieübertragungssystem nach einem der vorhergehenden Ansprüche, **dadurch gekennzeichnet, dass** die Windungen (13) der primärseitigen Flachspule (Sₚ) derart verteilt angeordnet sind, dass das Magnetfeld (15, 16) oberhalb der primärseitigen Anordnung betragsmäßig möglichst homogen ist.

5. Induktives Energieübertragungssystem nach einem der vorhergehenden Ansprüche, **dadurch gekennzeichnet, dass** die primär- und sekundärseitigen Flachspulen (Sₛ, Sₚ) die gleiche Anzahl Windungen (4, 13) aufweisen.

6. Induktives Energieübertragungssystem nach einem der vorhergehenden Ansprüche, **dadurch gekennzeichnet, dass** die Spulen (Sₛ, Sₚ) kreisförmig, rechteckig oder oval ausgebildet sind und/oder die Windungen entweder spiralförmig oder konzentrisch sind.

7. Induktives Energieübertragungssystem nach einem der vorhergehenden Ansprüche, **dadurch gekennzeichnet, dass** die Basisstation jeweils eine konzentriert gewickelte Flachspule sowie eine Flachspule mit zueinander beabstandeten Windungen aufweist und/oder die sekundärseitige Verbraucherseite jeweils eine konzentriert gewickelte Flachspule sowie eine Flachspule mit zueinander beabstandeten Windungen aufweist, derart, dass bidirektional elektrische Energie und/oder Daten zwischen Basisstation und Verbraucher übertragbar ist, wobei jeweils mittels einer Flachspule mit zueinander beabstandeten Windungen Energie und/oder Daten zu einer konzentriert gewickelten Flachspule übertragbar ist.

8. Induktives Energieübertragungssystem nach einem der vorhergehenden Ansprüche, **dadurch gekennzeichnet, dass** die primärseitige und/oder sekundärseitige Flachspule jeweils einen Windungsbereich mit Windungen aufweist, die konzentriert zueinander gewickelt sind und mindestens einen Windungsbereich aufweist, dessen benachbarte Windungen zueinander beabstandet sind.

9. Induktives Energieübertragungssystem nach Anspruch 9, **dadurch gekennzeichnet, dass** Schaltmittel vorhanden sind, mit denen ein oder mehrere Windungsbereiche aktiv schaltbar und somit mit einer nach- oder vorgeschalteten Elektronik verbindbar sind.

10. Induktives Energieübertragungssystem nach Anspruch 9 oder 10, **dadurch gekennzeichnet, dass** der konzentriert gewickelte Windungsbereich zum Empfang von elektrischer Energie als sekundärseitige Spule dient und dass alle Windungsbereiche oder nur bestimmte Windungsbereiche, insbesondere nur die Windungsbereiche mit zueinander beabstandeten Windungen, die primärseitige Spule bilden.

11. Induktives Energieübertragungssystem nach einem der vorhergehenden Ansprüche, **dadurch gekennzeichnet, dass** die primärseitige und/oder sekundärseitige Flachspule jeweils mindestens eine einzelne Windung oder Windungsbereiche aufweist, die relativ zu anderen Windungen verschieblich angeordnet sind und/oder deren Durchmesser sich ändern lässt, derart, dass das mit dieser Flachspule erzeugte Magnetfeld veränderbar ist.

12. Induktives Energieübertragungssystem nach einem der vorhergehenden Ansprüche, **dadurch g**e**kennz**e**i**c**hn**e**t**, dass die sekundärseitige Flachspule unter dem Fahrzeug oder im Bereich der Front oder des Hecks des Fahrzeugs, insbesondere im Bereich des Nummernschildes, angeordnet ist.

## Claims

1. Inductive energy transfer system for the transfer of electrical energy between a base station and a movable consumer, in particular a vehicle, whereby by means of the energy transfer system electrical energy can be transferred from a base station to the consumer and/or from the consumer to the base station, whereby the energy transfer system has at least one flat coil (Sₛ, Sₚ) having several windings (3, 4) arranged on the primary side in a base station, whereby the windings (3, 4) are arranged concentrically or in a spiral manner about a midpoint (M), whereby there is at least a distance (di) between a number of adjacent windings (13) of a primary side flat coil (Sₚ) and the distance (9, 10) between the winding arranged closest to the midpoint (M) and the winding arranged furthest from the midpoint (M) on the primary-side coil (Sₚ) is greater than on a secondary-side coil (Sₛ),
**characterised in that** t the inner winding of the primary-side flat coil (Sₚ) is arranged closer to the midpoint (M) than the inner winding of the secondary-side flat coil (Sₛ),
and **in that** the outermost winding of the primary-side flat coil (Sₚ) is arranged further from the midpoint (M) than the outermost winding of the secondary-side flat coil (Sₛ),
and **in that** the distance (dᵢ) between the individual windings (13) in the primary-side flat coil (Sₚ) from the midpoint (M) to the outermost winding decreases or the distances (dᵢ) between adjacent windings (13) on the primary-side flat coil (Sₚ) varies at least in part relative to one another.

2. Inductive energy transfer system according to Claim 1,
**characterised in that** t at least a number of adjacent windings in the primary-side coil (Sₚ) have a distance (dᵢ) relative to one another which is greater than the diameter of the coil conductor or winding wire, preferably at least 2 to 10 times that of the coil conductor or winding wire.

3. Inductive energy transfer system according to either Claim 1 or 2,
**characterised in that** the windings (4) on the secondary-side flat coil (Sₛ) are arranged concentrated relative to one another, in other words next to one another, in particular adjacent to one another.

4. Inductive energy transfer system according to any one of the preceding claims, **characterised in that** the windings (13) of the primary-side flat coil (Sₚ) are arranged distributed such that the magnetic field (15, 16) above the primary-side arrangement is as homogeneous as possible based on the amount.

5. Inductive energy transfer system according to any one of the preceding claims, **characterised in that** the primary-side and secondary-side flat coils (Sₛ, Sₚ) have the same number of windings (4, 13).

6. Inductive energy transfer system according to any one of the preceding claims, **characterised in that** the flat coils (Sₛ, Sₚ) are circular, rectangular or oval and/or the coils are either spiral-shaped or concentric.

7. Inductive energy transfer system according to any one of the preceding claims, **characterised in that** the base station has both a flat coil wound in a concentrated manner and a flat coil with windings at a distance from one another and/or the secondary-side consumer side has both a flat coil wound in a concentrated manner and a flat coil with windings at a distances from one another such that the bidirectional electrical energy and/or data can be transferred between the base station and the consumer, whereby in each case energy and/or data can be transferred to a flat coil wound in a concentrated manner by means of a flat coil with windings at a distance from one another.

8. Inductive energy transfer system according to any one of the preceding claims, **characterised in that** the primary-side and/or secondary-side flat coil each have a winding area with windings which are wound concentrically relative to one another and have at least one winding area, the adjacent windings of which are at a distance from one another.

9. Inductive energy transfer system according to Claim 9,
**characterised in that** there are switching devices, by means of which one or more winding areas can be actively switched and can therefore be connected to electronics connected upstream or downstream.

10. Inductive energy transfer system according to either Claim 9 or 10,
**characterised in that** the winding areas wound in a concentrated manner are used to receive electrical energy as a secondary-side coil and **in that** all winding areas or only certain winding areas, in particular only the winding areas with windings which are at a distance from one another form the primary-side coil.

11. Inductive energy transfer system according to any one of the preceding claims, **characterised in that** the primary-side and/or secondary side flat coil each have at least one individual winding or winding area which is arranged displaceably relative to other windings and/or the diameter of which can be changed such that the magnetic field generated using this flat coil can be changed.

12. Inductive energy transfer system according to any one of the preceding claims, **characterised in that** the secondary-side flat coil is arranged below the vehicle or in the region or the front or rear of the vehicle, in particular in the region of the number plate.

## Revendications

1. Système de transfert d'énergie par induction, servant à transférer de l'énergie électrique entre un poste de base et un consommateur mobile, en particulier un véhicule automobile, l'énergie électrique pouvant être transférée à l'aide du système de transfert d'énergie d'un poste de base au consommateur et/ou du consommateur au poste de base, où le système de transfert d'énergie présente au moins une bobine plate (Sₛ, Sₚ) disposée côté primaire dans le poste de base et disposée côté secondaire dans le consommateur, dotée à chaque fois de plusieurs spires (3, 4), les spires (3, 4) étant disposées de manière concentrique ou en spirale autour du point central (M) et où une distance (dᵢ) existe entre au moins quelques spires adjacentes (13) d'une bobine plate (Sₚ) disposée côté primaire et où l'écart (9, 10) entre la spire la plus proche du point central (M) et la plus éloignée du point central (M) est supérieur sur la bobine disposée côté primaire (Sₚ) que sur une bobine disposée côté secondaire (Sₛ), **caractérisé en ce que** la spire intérieure de la bobine plate (Sₚ) disposée côté primaire est agencée plus proche du point central (M) que la spire intérieure de la bobine plate (Sₛ) disposée côté secondaire,
et que la spire la plus extérieure de la bobine plate (Sₚ) disposée côté primaire est agencée plus éloignée du point central (M) que la spire la plus extérieure de la bobine plate (Sₛ) disposée côté secondaire,
et que la distance (dᵢ) entre les spires individuelles (13) de la bobine plate (Sₚ) disposée côté primaire diminue entre un point central (M) et la spire la plus extérieure ou les distances (dᵢ) entre les spires adjacentes (13) de la bobine plate (Sₚ) disposée côté primaire sont entre-elles, au moins partiellement, de dimensions différentes.

2. Système de transfert d'énergie par induction selon la revendication 1,
**caractérisé en ce qu'**au moins quelques spires adjacentes de la bobine (Sₚ) disposée côté primaire présentent une distance (dᵢ) entre-elles qui est supérieure au diamètre du conducteur d'enroulement ou du fil d'enroulement et qui correspond, de préférence, de 2 à 10 fois le diamètre du conducteur d'enroulement ou du fil d'enroulement.

3. Système de transfert d'énergie par induction selon la revendication 1 ou 2,
**caractérisé en ce que** les spires (4) de la bobine plate (Sₛ) disposée côté secondaire sont agencées entre-elles de manière concentrique, c'est-à-dire, l'une à côté de l'autre, en particulier de sorte à être adjacentes.

4. Système de transfert d'énergie par induction selon une des revendications précédentes, **caractérisé en ce que** les spires (13) de la bobine plate (Sₚ) disposée côté primaire sont agencées de manière à être reparties de telle sorte que le champ magnétique (15, 16) au-dessus de l'agencement disposé du côté primaire est le plus homogène possible.

5. Système de transfert d'énergie par induction selon une des revendications précédentes, **caractérisé en ce que** les bobines plates (Sₛ, Sₚ) disposées côté primaire et côté secondaire présentent le même nombre de spires (4, 13).

6. Système de transfert d'énergie par induction selon une des revendications précédentes, **caractérisé en ce que** les bobines (Sₛ, Sₚ) sont conçues de sorte à être circulaires, rectangulaires ou ovales et/ou les spires sont en forme de spirale ou concentriques.

7. Système de transfert d'énergie par induction selon une des revendications précédentes, **caractérisé en ce que** le poste de base présente à chaque fois une bobine plate enroulée de manière concentrique ainsi qu'une bobine plate pourvue de spires mutuellement espacées et/ou le côté consommateur disposé côté secondaire présente à chaque fois une bobine plate enroulée de manière concentrique ainsi qu'une bobine plate pourvue de spires mutuellement espacées, de telle sorte que l'énergie électrique bidirectionnelle et/ou des données entre le poste de base et le consommateur sont susceptibles d'être transmises, auquel cas l'énergie et/ou les données sont susceptibles d'être transmises, respectivement à l'aide d'une bobine plate pourvue de spires mutuellement espacées, à une bobine plate enroulée de manière concentrique.

8. Système de transfert d'énergie par induction selon une des revendications précédentes, **caractérisé en ce que** la bobine plate disposée côté primaire et/ou côté secondaire présente à chaque fois une partie spires pourvue de spires enroulées entre-elles de manière concentrique et au moins une partie spires dont les spires adjacentes sont espacées entre-elles.

9. Système de transfert d'énergie par induction selon la revendication 9,
**caractérisé en ce que** l'on prévoit des moyens de commutation par lesquels une ou plusieurs parties spires sont susceptibles d'être commandées activement et sont ainsi susceptibles d'être branchées à un dispositif électronique placé en amont ou en aval.

10. Système de transfert d'énergie par induction selon la revendication 9 ou 10,
**caractérisé en ce que** la partie spires enroulée de manière concentrique destinée à recevoir une énergie électrique sert de spire disposée côté secondaire et que toutes les parties spires ou seulement certaines parties spires, en particulier seulement les parties spires pourvues de spires espacées entre-elles, forment les spires disposées côté primaire.

11. Système de transfert d'énergie par induction selon une des revendications précédentes, **caractérisé en ce que** la bobine plate côté primaire et/ou côté secondaire présente à chaque fois au moins une seule spire ou une partie spires agencée de manière déplaçable par rapport aux autres spires et/ou dont le diamètre se laisse modifier de telle sorte à pouvoir modifier le champ magnétique produit avec cette bobine plate.

12. Système de transfert d'énergie par induction selon une des revendications précédentes, **caractérisé en ce que** la bobine plate disposée côté secondaire est agencée sous le véhicule ou dans la zone située à l'avant ou à l'arrière du véhicule, en particulier dans la zone de la plaque d'immatriculation.
